**Europäisches Patentamt**

**(19) European Patent Office**

**Office européen des brevets**

(11) Publication number : **0 431 822 B1**

(12) **EUROPEAN PATENT SPECIFICATION**

(45) Date of publication of patent specification :
29.09.93 Bulletin 93/39

(51) Int. Cl.⁵ : **B60C 15/04**

(21) Application number : **90312925.2**

(22) Date of filing : **28.11.90**

(54) **Bead wire for tyres.**

(30) Priority : **05.12.89 JP 317125/89**

(43) Date of publication of application :
**12.06.91 Bulletin 91/24**

(45) Publication of the grant of the patent :
**29.09.93 Bulletin 93/39**

(84) Designated Contracting States :
**DE FR GB**

(56) References cited :
**US-A- 2 939 207**
**US-A- 4 859 289**
**PATENT ABSTRACTS OF JAPAN vol. 13, no.
335 (M-856) 27 July 1989, & JP-A-1 113234
(SUMITOMO ELECTRIC IND. LTD.) 01 May
1989,**

(73) Proprietor : **SUMITOMO RUBBER INDUSTRIES
LIMITED**
**1-1 Tsutsuicho 1-chome Chuo-ku**
**Kobe-shi Hyogo-ken (JP)**

(72) Inventor : **Hoshino, Hiroshi**
**1-20-204 Suganodai 2-chome**
**Suma-ku, Kobe-shi, Hyogo-ken (JP)**
Inventor : **Miyazaki, Shinichi**
**7-43-303 Miyuki-cho 3-chome**
**Suma-ku, Kobe-shi, Hyogo-ken (JP)**

(74) Representative : **Stewart, Charles Geoffrey**
**SP TYRES UK LIMITED Tyre Technical
Division**
**Fort Dunlop, Erdington, Birmingham B24 9QT
(GB)**

EP 0 431 822 B1

Jouve, 18, rue Saint-Denis, 75001 PARIS

## Description

The present invention relates to a bead wire for tyres, a rubber coated bead wire for tyres and a tyre using the rubber coated bead wires, and more particularly to a bead wire for tyres which is plated with a metal mixture having a specific weight ratio in a specific amount, a rubber coated bead wire for tyres which is obtained by coating the specifically placed bead wire as mentioned above with a specific rubber composition and a tyre prepared by using the rubber coated bead wires as mentioned above.

In general in order to improve adhesion between wire and a rubber layer formed on the wire, particularly, when using the wire as bead wires in a tyre, to reduce deterioration of the adhesion resulting from stress and heat caused by running the tyre, the bead wire is copper/tin plated (as shown, e.g. in US-A-2 939 207), then the plated wire is combined with a rubber composition by coating (hereinafter referred to as "bead coating rubber composition", and the resultant rubber coated bead wire is used for the bead cores in a tyre.

An adhesion reaction between the bead wire and the rubber layer occurs during the vulcanisation step which is one step of the tyre building operation. It is said that the adhesion reaction is caused between the bead wire and the rubber layer by the vulcanisation to form a reaction layer. In order to obtain an excellent adhering state, it is necessary to obtain a reaction layer wherein the bead wire reacts sufficiently to the rubber layer to form an excellent adhesion level.

Observing the rubber layer on the bead wire in regard to deterioration of the adhesion of tyres during use shows some tyres where peeling is caused in the reaction layer, which sometimes exerts a bad influence on the life of the tyre. If the bead wire does not strongly react with the rubber layer (the reaction layer does not have the necessary excellent adhesion), the adhesion between the bead wire and the rubber layer is lowered by the stress and heat generated during the running of tyres. In extreme cases the rubber layer is peeled off from the bead wire, and more remarkably, there are cases where the loosened bead wires protrude from the tyre (such damage in the bead portions is referred to as "wild wire"). Since the occurrence of the above-mentioned is affected by stress and heat in the bead portions, the problems occur more in tyres used under conditions of heavy load and high speed, such as tyres for aeroplanes which must bear a heavier load than loads applying to tyres used in other categories and must withstand high speed such as more than 300 km/hr.

In order to reduce the disadvantages mentioned above, there has been known a method wherein triazine thiole is used as a crosslinking auxiliary for the adhesion reaction between the rubber layer and the bead wire. When applying this method to tyres used under conditions of heavy load and high speed, such as tyres for aeroplanes, however, the adhesion is still unsatisfactory and the cost becomes excessively high.

An object of the present invention is to provide a bead wire for tyres having an excellent adhesion to rubber.

A further object of the present invention is to provide a rubber coated bead wire for tyres having an excellent adhesion between the bead wire and the rubber layer.

A still further object of the present invention is to provide a tyre which avoids the disadvantages mentioned above.

According to one aspect of the present invention, there is provided a bead wire for tyres having a copper/tin deposit or coating having a tin content of 9 to 13 % by weight and a copper content of 91 to 87 % by weight in an amount of 0.65 to 0.85 g per kilogram of the wire.

More preferably the tin content is 10 to 12% by weight.

The copper content may be 90 to 88% by weight.

A more preferred amount of deposit is 0.70 to 0.80 g per kilogram of wire.

Also, in accordance with another aspect of the present invention, there is provided a rubber coated bead wire for tyres which comprises a bead wire having a copper tin deposit or coating having tin content of 9 to 13 % by weight and a copper content of 91 to 87 % by weight in an amount of 0.65 to 0.85 g per kilogram of the wire and a rubber layer formed on the bead wire from a composition comprising 100 parts by weight of a rubber polymer, 80 to 140 parts by weight of carbon black, 4 to 10 parts by weight of sulphur, 0.4 to 0.98 part by weight of a vulcanisation accelerator, 10 to 17 parts by weight of zinc oxide and 1 to 4 parts by weight of stearic acid.

Further, in accordance with the present invention, there is provided a tyre comprising bead portions having bead cores prepared by circularly winding rubber coated bead wires and a carcass rolled up from the inside in the axial direction of the wire toward the outside around the bead core, the rubber coated bead wire comprising a bead wire having a copper tin deposit having a tin content of 9 to 13 % by weight and a copper content of 91 to 87 by weight in an amount of 0.65 to 0.85 g per kilogram of the wire and a rubber layer formed on the bead wire from a composition comprising 100 parts by weight of a rubber polymer, 80 to 140 parts by weight of a carbon black, 4 to 10 parts by weight of sulphur, 0.4 to 0.9 part by weight of a vulcanisation accelerator, 10 to 17 parts by weight of zinc oxide and 1 to 4 parts by weight of stearic acid.

Further aspects will be apparent from the following embodiment developed in conjunction with the attached drawings in which:-

2

Fig.1. is a graph showing how a drawing strength of rubber coated bead wires obtained in Example 6 varies depending on amounts of 4 vulcanisation accelerator, MOR and sulphur; and

Fig.2 is a graph showing how a percentage of bead wires to which a rubber adheres of the rubber coated bead wires obtained in Example 6 varies depending on amounts of vulcanisation accelerator, MOR and sulphur.

It is generally said that it is important that the vulcanisation rate of the bead coating rubber composition should be matched to the adhesion rate between the bead wire and the rubber layer with respect to the adhesion reaction between the bead wire and the rubber layer.

On the other hand, the rubber used in the rubber layer formed on the bead wire should in general have a higher vulcanisation rate, (i.e. a scorch time ($t_2$) and a 90% vulcanising time ($T_{90}$) than the vulcanisation rates of the components used in other portions of the tyre, since the rubber layer on the bead wire is placed in an internal position in the tyre. If the vulcanisation rate of the rubber layer on the bead wire is slower than for other components then the cure of the rubber is insufficient.

It has now been found that in order to obtain the more excellent adhesion between the rubber layer having the vulcanisation rate as mentioned above and the bead wire, it is better than the rate of the adhesion reaction between the bead wire and the rubber layer is further increased. The inventor has discovered that if the composition of the deposit on the bead wire, the weight ratio of the two metals and the amount of the deposit are within specific ranges according to the invention then the vulcanisation rate is matched with the adhesion rate to effectively obtain the excellent adhesion. Also, when the rubber layer is formed on the plated bead wire from the specific rubber composition of the invention the more excellent adhesion can be obtained.

In the present invention, the bead wire is copper/tin plated, and the deposit on the bead wire has a tin content of 9 to 13 % by weight, more preferably from 10 to 12 % by weight and a copper content of 91 to 87 by weight, more preferably from 90 to 88 % by weight. The amount of the deposit is from 0.65 to 0.85 g and more preferably from 0.70 to 0.80g, per kilogram of the tyre.

In the present invention, steel wires to be plated are not particularly limited. Any bead wire can be used so long as it is generally used as the bead wire for a tyre. For instance, hard steel wires having a diameter of 0.97mm or 1.55mm, can be used. Among them, high carbon steel wire rods according to Japanese Industrial Standards (JIS) G 3506 and JIS G 3502, for instance, SWRH 67A and SWRH 72A according to JIS G 3506 and SWRS 77A and SWRS 92A according to JISA G 3502 are preferable from the viewpoints of the physical properties such as tensile load, elongation and torsion number.

Only when the bead wire has the copper/tin deposit having the weight ratio of the two metals as specified above in the invention is the lowering of the adhesion between the bead wire and the rubber layer effectively prevented. Particularly, the plated bead wire of the present invention is useful for tyres used under conditions of heavy load and high internal pressure such as tyres for aeroplanes.

If the tin content in the deposit is less than 9% by weight, the activation of the adhesion reaction caused by the plating is increased to increase the adhesion rate. If the vulcanisation rate matching with such an adhesion rate is provided then burning or scorching is caused during vulcanisation. On the other hand, if the tin content is more than 13 % by weight, the activation of the adhesion reaction caused by the plating is decreased to decrease the adhesion rate. If a vulcanisation rate is used to match such an adhesion rate, the rubber is undercured during the vulcanisation step.

Also, when the bead wire is copper/tin plated to an amount of less than 0.65 g per kilogram of wire, the activation of the adhesion reaction caused by the plating is decreased to decrease the adhesion rate. To obtain the vulcanisation rate matching such an adhesion rate results in the rubber being undercured during the vulcanisation. On the other hand, if the amount is more than 0.85 g per kilogram of wire, the activation of the adhesion rate caused by the plating is increased to increase the adhesion rate. Then using the vulcanisation rate to match such an adhesion rate results in burning or scorching.

In the present invention the methods used for copper/tin plating of the bead wire are not limited, and the usual methods such as the electroless plating method or the thermal diffusion method are applicable to the plating method of the present invention.

The degree of plating is not particularly limited, and a plating having a uniformity equal to the uniformity of the plating of the usually plated bead wires for tyres can suffice for the present invention.

Then in the present invention, the bead wire as plated above is covered with the specified rubber composition as follows.

The reason why the plated bead wire for tyres is coated with the rubber composition is that, as mentioned above, the reaction layer in which the adhesion reaction occurs (strong adhesion reaction) is formed between the plated bead wire and the rubber layer to make the high adhesion level between the bead wire and the rubber layer, thus resulting in the improvement of the durability of the bead core.

In the present invention, the rubber composition to be coated on the plated bead wire (bead coating rubber composition) comprises rubber polymer, carbon black, the vulcanisation accelerator, zinc white (zinc oxide) and stearic acid.

The rubber polymer is one of the principal components of the bead coating rubber composition and is used to provide elastomeric properties. Examples of the rubber polymers are, for instance, natural rubber, a blend of natural rubber and isoprene rubber, a blend of a natural rubber, isoprene rubber and liquid isoprene rubber, a blend of a natural rubber and SBR (styrene butadiene rubber), or the like. The rubber polymers are not limited thereto and any rubber polymer can be used so long as it is usually used as the rubber polymer in, the bead coating rubber composition.

Carbon black is a principal component of a rubber bead coating rubber composition together with the rubber polymer and is used to provide reinforcement of the rubber.

The particle size of carbon black is not particularly limited and any carbon black can be used so long as it is usually used in bead coating rubber composition. GPW (General Purpose Furnace) and FEF (Fast Extruding Furnace) and their mixture are preferred blacks from the viewpoints of cost and processability.

The amount of the carbon black is from 80 to 140 parts by weight, preferably from 100 to 140 parts by weight, based on 100 parts by weight of rubber polymer. When the amount of carbon black is less than 80 parts by weight, the hardness is unsatisfactory, so it is too difficult to use the rubber for bead cores of tyres used under conditions of heavy load and high speed. On the other hand, when the amount is more than 140 parts by weight, the viscosity (Mooney viscosity) is too high, so it is too difficult to manufacture tyres.

Sulphur is used to provide the vulcanisation of the rubber and also to provide the bond to the copper/tin plating on the bead wire. The measurement of the strength of the adhesion obtained can be assessed by measuring the percentage of bead wires to which the rubber adheres. This term 'percentage of bead wires to which the rubber adheres' means the percentage of bead wire having no metal gloss when wires are stripped from a test sample which is a direct measure of the percentage of the wire surface which has the necessary excellent adhesion. The purity of the sulphur itself is not particularly limited and any sulphur can be used so long as it is that usually used for vulcanising rubbers for tyres.

The amount of sulphur is from 4 to 10 parts by weight, preferably from 6 to 8 parts by weight, based on 100 parts by weight of rubber polymer. If the amount of sulphur is less than 4 parts by weight, the amount of sulphur used in the vulcanisation reaction of the rubber and the adhesion reaction between the plated bead wire and the rubber layer is in too short supply and as a result, the excellent adhesion cannot be obtained.

On the other hand, of the amount is more than 10 parts by weight, blooming of sulphur on the mixed rubber stock (before vulcanisation) is caused which is disadvantageous on the preparation.

For the vulcanisation accelerator any of the usual vulcanisation accelerators can be used. Examples of vulcanisation accelerators are thizole accelerators such as M (2-mercaptobenzothiazole), DM (dibenzothiazyl disulphide) and MZ (zinc salt of 2-mercaptobenzothiazole, sulphenamide accelerators such as CZ (N-cyclohexyl-2-benzothiazolesulfenamide), NS (N-terbutyl-2-benzothiazolylsufenamide), MOR (N-oxydiethylene-2-benzothiazolesulfenamide) and DZ (N,N-dicyclohexyl-2-benzothiazolesulfenamide), dithiocarbamate accelerator such as EZ (zinc diethyldichlrocarbamate), BZ (zinc D-n-butyldithiocarbamate), PX (zinc ethylphenyldithiocarbamate) and ZP (zinc N-pentamethylene dithiocarbamate), quanidine accelerators such as D (1,3-diphenyquanidine), DT (di-o-tolylguanidine), VG (1-o-tolylbiguanidine) and PR (di-o-tolylguanidine salt of dicatechol borate), thiuram accelerators such as TT (tetramethylthiuramdisulfide, TET (tetramethylthiuramdisulfide, TBT (tetrabutylthiuramdisulfide) and TS tetramethylthiuramminosulfide), and the like. Among the vulcanisation accelerators, MOR which has a long scorch time ($tPV2PV$) and a fast vulcanisation rate ($T_{90PV}$) and blends of MOR and an other vulcanisation accelerator are preferable from the viewpoints of burning during vulcanisation and undercure.

The amount of the vulcanisation accelerator is from 0.4 to 0.9 part by weight, preferably from 0.6 to 0.8 part by weight, based on 100 parts by weight of the rubber polymer. If the amount of the vulcanisation accelerator is less than 0.4 part by weight, the vulcanisation rate of the rubber on the bead wire becomes slow, so the rubber is undercurred. On the other hand, if the amount is more than 0.9 part by weight, the vulcanisation rate is increased, so burning occurs during the preparation steps.

Zinc oxide is reacted with stearic acid to give zinc stearate functioning as a vulcanisation auxiliary.

In the case where sulphur is used in a large amount compared to the amount of the rubber polymer, as in the present invention, the use of too small an amount of zinc stearate provides insufficient vulcanisation, and the use of too large an amount of zinc stearate causes crystallisation of the rubber component and lowering of the braking strength of the rubber on the bead wire. From the above mentioned viewpoints, the amount of zinc oxide is from 10 to 17 parts by weight, more preferably from 12 to 15 parts by weight, based on 100 parts by weight of the rubber polymer. Also, the amount of stearic acid is from 1 to 4 parts by weight, more preferably from 2 to 3 parts by weight, based on 100 parts by weight of the rubber polymer.

As mentioned above since zinc oxide and stearic acid react to form zinc stearate, and the zinc stearate functions as the vulcanisation accelerator, it is possible to use zinc stearate instead of zinc oxide and stearic acid in the bead coating rubber composition. However, when zinc stearate is used from the beginning, the vulcanisation may be excessively accelerated and so the handling time for the material is shortened. Accordingly, it is preferable to use the combination of zinc white and stearic acid.

The rubber coated bead wire of the present invention made by forming a rubber layer on the above mentioned plated bead wire from the above mentioned bead coating composition are used to make bead cores. the bead core is made by circularly winding the desired number of the rubber coated bead wires (for instance, 5 to 30 wires) arranged side by side in a row and then winding over the first row desired turns/e.g. 5 to 40 turns so as to place a turn over each previous turn.

The wound bead wires then can be used as the bead cores in the assembly of tyres. Rubber layers are used on the upper portion (which in the tyre is the tread side) and on both sides alternatively on the upper portion, the bottom portion (axial side) and on both sides of the wound bead wires and then the occurrence of wild wire can be prevented completely.

Although the occurrence of wild wires can be prevented the reason is not fully understood but it is thought to be as follows: The bead portions are fatigued by the compression shear forces generated by rotation of the size and the temperature elevation caused by heat generation with tyre and conduction of brake heat to combine together and deteriorate the adhesion between the bead wire and the rubber layer result is that the bead wires can move. On the other hand, while rotating, the tyres receive load and a force is applied to the bead wire in the opposite direction to the direction of rotation of the tyres. Especially when the winding direction of the bead wires is the same as the rotation direction of the tyre, the end portions of the wound bead wires are peeled by the impact caused by the rotation and the repeated compression can cause compression fracture of the bead wires, thus resulting in cut bead wires moving in the direction of rotation and protruding from the tyre. If rubber layers are provided particularly on the upper portion and both sides, however, the impact cause by the rotation is alleviated to decrease the deterioration of adhesion.

For the rubber layer to be formed on the circumlarly wound bead wires, it is preferable that the same rubber as is used in the bead coating rubber composition is used and this is formed in a thickness of about 0.5 to 1.5mm.

In the present invention, the bead cores which comprise circularly wound rubber coated bead wires wound with a turn on a previous turn, bead cores which compared circularly wound bead wires having rubber layers formed on their upper portion and both sides or more preferably the bead cores in which the circularly wound bead wires have rubber layers formed on their upper portion, both sides and bottom portion are wrapped in a fabric which is coated with rubber. Thus a prepared bead core is made which can be used as an assenbly. Then in tyre building when the carcass is rolled up from the inside in the axial direction of the tyre towards the outside around the bead portion, the carcass, the rubber for the side walls and the materials for the tread are assembled into a finished green tyre and vulcanisation is conducted to give a cured tyre.

The type of the carcass, carcass rubber, rubber for the side walls and materials for the tread and the conditions for assembling, forming and vulcanisation are not particularly limited and materials and any conditions which are usually adopted can be applicable to the preparation of the tyres of the present invention,

Thus the prepared tyres of the present invention have excellent adhesion between the plated bead wire and the rubber layers. Wild wires do not occur because the rubber coated wires comprising the plated bead wires having the copper/tin deposit having the specific composition in the specific amount, the plating being capable of giving the excellent adhesion between the plated bead wire and the rubber layer and excellent properties to the tyre, and the rubber layer formed on the bead wire from the specific composition are used. Accordingly, the tyres of the present invention are particularly suitable for use as tyres used under the conditions of heavy load and high speed such as tyres for aeroplanes.

The present invention is more specifically described and explained by means of the following examples where all percentages and part are by weight unless otherwise noted. It is to be understood that the present invention is not limited to the examples, and various changes and modifications may be made in the invention without departing from the spirit and scope thereof.

### Examples 1 to 4 and Comparative Examples 1 to 10

A steel wire was Cu/Sn-plated to give a bead wire having a Cu/Sn deposit having a Sn content of 8%, 10%, 12% or 14% in an amount of 0.55 g/kg, 0.65 g/kg, 0.75 g/kg or 0.90 g/kg.

The plated bead wires were embedded in the bead coating rubber composition shown in Table 1 in a sample or test length of 50 mm. Vulcanisation was conducted at a temperature of 150°C for 35 minutes under a mould face pressure of 60 plus or minus 30 kg/cm to give a sample having a thickness of about 14mm and a space between the wires of about 12.5mm. Then, the sample was allowed to cool at room temperature for more than 12 hours, burrs were removed therefrom and the bead wires sticking out from the rubber were cut off with a grinder or nipper. The obtained sample was drawn at a drawing rate of 50 mm/minute in a drawing slit width of 8mm to measure a drawing strength and the percentage of bead wires having no metal gloss to which the rubber adhered (a percentage of the bead wires to which the rubber adhered).

The results are shown in Table 1.

EP 0 431 822 B1

Table 1

| Bead-coating rubber composition | A | B | C |
|---|---|---|---|
| **Composition (part)** | | | |
| Natural rubber | 100 | 100 | 75 |
| SBR | – | – | 25 |
| FEF | 120 | 120 | 120 |
| Stearic acid | 2 | 4 | 2 |
| Zinc white | 15 | 5 | 5 |
| Sulfur | 6 | 4 | 4 |
| Vulcanization accelerator | | | |
| MOR | 0.5 | 0.9 | 0.9 |
| DZ | 0.4 | – | – |
| **Property of the composition*** | | | |
| Minimum torque (kg·cm) | 4.0 | 4.3 | 5.1 |
| Scorch time, $t_2$ (minute) | 4.3 | 6.3 | 8.3 |
| 90 %-vulcanization time (minute) | 20.0 | 16.8 | 19.8 |
| Maximum torque (kg·cm) | 49.4 | 43.1 | 41.3 |

(Note) *: measured by a CurelastometerIII ( @ 150°C) commercially available from Japan Synthetic Rubber Co., Ltd.

Table 2

| | Deposite | | Drawing strength (kg/wire) [Percentage of wires to which the rubber adhered (%)] | | |
| --- | --- | --- | --- | --- | --- |
| | Sn content(%) | Amount of deposite (g/kg) | Composition A | Composition B | Composition C |
| Com.Ex. 1 | 8 | 0.65 | 125 [45] | 115 [25] | 95 [15] |
| " 2 | 8 | 0.75 | 125 [40] | 130 [45] | 65 [0] |
| " 3 | 8 | 0.90 | 115 [45] | 120 [50] | 70 [5] |
| Com.Ex. 4 | 10 | 0.55 | 120 [60] | 90 [30] | 85 [15] |
| Ex. 1 | 10 | 0.65 | 135 [70] | 120 [50] | 80 [10] |
| Ex. 2 | 10 | 0.75 | 140 [70] | 125 [55] | 90 [15] |
| Com.Ex. 5 | 10 | 0.90 | 140 [75] | 125 [55] | 110 [40] |
| Com.Ex. 6 | 12 | 0.55 | 125 [60] | 100' [35] | 90 [30] |
| Ex. 3 | 12 | 0.65 | 135 [70] | 125 [55] | 85 [25] |
| Ex. 4 | 12 | 0.75 | 140 [80] | 130 [60] | 85 [25] |
| Com.Ex. 7 | 12 | 0.90 | 125 [60] | 120 [45] | 100 [30] |

- continued -

| | Deposite | | Drawing strength (kg/wire) [Percentage of wires to which the rubber adhered (%)] | | |
|---|---|---|---|---|---|
| | Sn content(%) | Amount of deposite (g/kg) | Composition A | Composition B | Composition C |
| Com.Ex. 8 | 14 | 0.55 | 110 [35] | 90 [20] | 120 [55] |
| " 9 | 14 | 0.65 | 110 [45] | 100 [35] | 95 [40] |
| " 10 | 14 | 0.75 | 105 [30] | 105 [40] | 100 [45] |

EP 0 431 822 B1

EP 0 431 822 B1

Table 3

| | Sn-content (%) | Amount of Cu/Sn-deposite (g/kg) | Percentage of bead wires to which the rubber adhered (N=4) |
|---|---|---|---|
| Ex. 5 | 12.3 | 0.74 | 50, 60, 65, 65 |
| Com.Ex. 11 | 12.2 | 0.55 | 30, 35, 40, 40 |

From the results of the drawing strength and the percentage of bead wires to which the rubber adhered as to the bead-coating rubber compositions, A, B, C as shown in Table 2, it can be seen that the most advan-

10

tageous Sn content of the deposit was 12% and the amount of the deposit was 0.75 g per kilogram of the wire.

## Examples 5 and Comparative Examples 11

A steel wire was Cu/Sn-plated in the same amount as in Example 4 to give a bead wire having a Cu/Sn deposit having a Sn content of 12.3% in an amount of 0.74 g/kg. The plated bead wire was coated with the bead coating rubber composition B shown in Table 1 in a thickness of 0.3mm. The eight rubber coated bead wires arranged side by side in a row were circularly wound 10 tyres with each turn set on a previous turn. The same rubber as used in the bead coating rubber composition B was wound around the wound bead wires at a thickness of 1mm, around which a canvas for wrapping bead wires coated with rubber was further wound to give a bead core. Using these bead cores, tyres for aeroplanes 45 x 18.0-20 were made, and the tyres were run under TSC C62C running conditions. Then, the rubber coated bead wires were cut out as samples from the tyres, and the drawing test was conducted four times in the same manner as in example 1 to give percentages of bead wires to which the rubber adhered.

The procedure of Examples 5B was repeated except that a plated bead wire having a Cu/Sn deposit having an Sn content of 12.2% in an amount of 0.55 g/kg was used to give a rubber coated bead wire. then , using the rubber coated bead wires, tyres were prepared and the running test was conducted in the same manner as in Example 5. After sampling the rubber coated bead wires from the tested tyres, the drawing test was conducted in the same manner as in example 5 to give percentage of bead wires to which the rubber adhered (Comparative Examples 11).

The results are shown in Table 3.

A steel wire was Cu/Sn plated to give a bead wire having a deposit having a Sn content of 12.0% and a Cu content of 88.0% in an amount of 0.78 g/kg (the same plated belt wire as obtained in Ex 4). The rubber coated bead wire was embedded in a bead coating rubber composition of 100 parts of a natural rubber, 120 parts of carbon GPF, 2 parts of stearic acid, 15 parts of zinc white, 2 to 10 part of sulphur and 0.30 to 1.10 parts of a vulcanisation accelerator MOR in a length of 50mm, the vulcanisation was conducted at a temperature of 150°C for 35 minutes under a mould face pressure of 80 30 kg/Cm. Then the procedure of Example 1 was repeated to give samples and the drawing test was conducted at a drawing rate of 50mm/minute in a drawing slit width of 8 mm to measure drawing strengths and percentage of bead wires to which the rubber adhered.

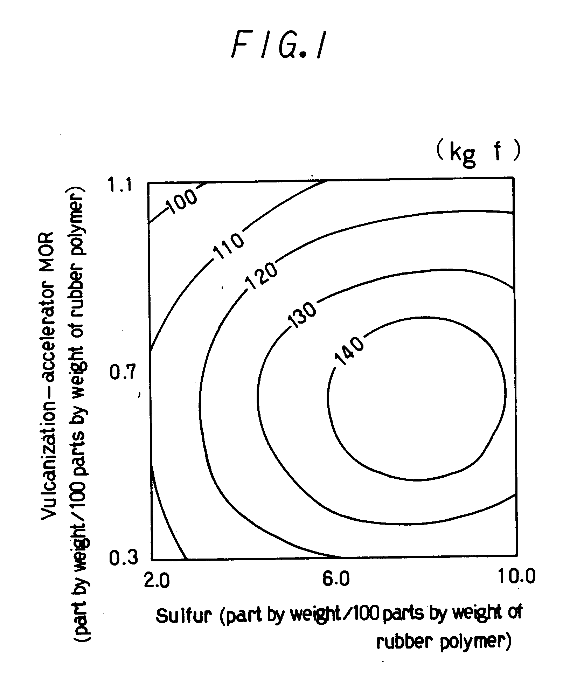

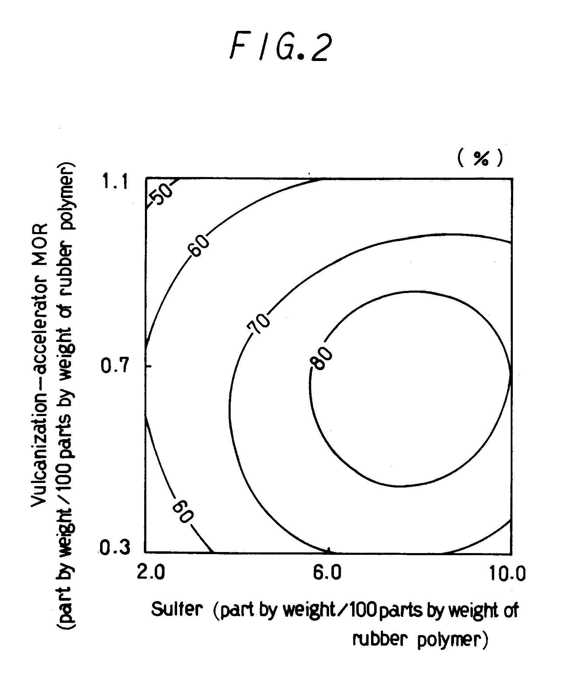

The results are shown in Figs. 1 and 2.

## Examples 7 and Comparative Examples 12

A steel wire was Cu/Sn-plated in the approximately same manner as in Example 6 to give a bead wire having a Cu/Sn deposit having an Sn content of 12.3% in an amount of 0.74 g/kg. The plated bead wire was coated with a bead coating rubber composition of 100 parts of a natural rubber, 120 parts of FEF, 6 parts of sulphur, 0.5 part of MCR and 0.1 part of DZ which were vulcanised accelerators, 15 parts of zinc white, and 2 parts of stearic acid in a thickness of 0.3mm. The eight rubber coated bead wires arranged side by side in a row were wound 10 turns so as to set a turn on a previous turn, the same rubber as used in the bead coating rubber composition was wound around the wound bead wires in a thickness of 1mm, around which a canvas for wrapping bead wire coated with a rubber was further wound to give a bead core. Using the bead cores, aeroplane tyres of size E 46 x 15.0-20 were made, and the tyres were run under TSO C62C conditions. then, the rubber coated bead wires were sampled from the tyres, the drawing test was conducted four times in the same manner as in Examples 1 to give percentages of the bead wires to which the rubber adhered.

The procedure of Example 7 was repeated except that a plated bead wire having a Cu/Sn deposit having an SN content of 12.2% in an amount of 0.55 g/kg was used to give a rubber coated bead wire, and as the bead coating rubber composition to be coated on the plated bead wire, the bead coating rubber composition B shown in Table 1 was used. Using the bead wires, tyres were made and the running test was conducted in the same manner as in Example 7 to give percentage of bead wires to which the results are shown in Table 4.

Table 4

| | Sn-content (%) | Amount of Cu/Sn-deposite (g/kg) | Percentage of bead wires to which the rubber adhered (N=4) |
|---|---|---|---|
| Ex. 7 | 12.3 | 0.74 | 60, 70, 80, 80 |
| Com.Ex.12 | 12.2 | 0.55 | 30, 35, 40, 40 |

As shown above, the bead wires of the present invention are excellent in adhesion. Also, the rubber coated bead wires of the present invention having remarkably good adhesion to the plated bead wire. Accordingly, the plated bead wires, particularly the rubber coated wires of the present invention have excellent adhesion between the plated bead wire and the rubber layer, and sizes using the bead wires of the present invention do not have wild wires.

In addition to the ingredients used in Examples, other ingredients can be used in the Examples as set forth in the specification to obtain substantially the same results.

**Claims**

1.  A bead wire for tyres having a copper/tin deposit or coating characterised by a tin content of 9 to 13% by weight and a copper content of 91 to 87% by weight in an amount of 0.65 to 0.85 g per kilogram of the wire.

2.  A bead wire according to claim 1 characterised in that the tin content 10 to 12% by weight.

3.  A bead wire according to claim 1 or 2 characterised in that copper control is 90 to 88% by weight and

4.  A bead wire according to claim 1, 2, or 3 characterised in that the amount of deposit is 0.70 to 0.80g per kilogram of the wire.

**Patentansprüche**

1.  Wulstdraht für Reifen mit einer Kupfer/Zinn-Abscheidung oder -Beschichtung, gekennzeichnet durch einen Zinngehalt von 9 bis 13 Gew.-% und einem Kupfergehalt von 91 bis 87 Gew.-% in einer Menge von 0,65 bis 0,85 g pro kg Draht.

2.  Wulstdraht nach Anspruch 1, dadurch gekennzeichnet, daß der Zinngehalt 10 bis 12 Gew.-% beträgt.

3.  Wulstdraht nach Anspruch 1 oder 2, dadurch gekennzeichnet, daß der Kupferanteil 90 bis 88 Gew.-% beträgt.

4.  Wulstdraht nach einem der Ansprüche 1, 2 oder 3, dadurch gekennzeichnet, daß die Abscheidungsmenge 0,70 bis 0,80 g pro kg Draht beträgt.

**Revendications**

1.  Fil de tringle pour pneumatique, ayant un revêtement ou dépôt de cuivre-étain, caractérisé en ce que la teneur en étain est comprise entre 9 et 13 % en poids et la teneur en cuivre entre 91 et 87 % en poids, le dépôt étant présent à raison de 0,65 à 0,85 g par kilogramme du fil.

2.  Fil de tringle selon la revendication 1, caractérisé en ce que la teneur en étain est comprise entre 10 et 12 % en poids.

3.  Fil de tringle selon la revendication 1 ou 2, caractérisé en ce que la teneur en cuivre est comprise entre 90 et 88 % en poids.

4.  Fil de tringle selon la revendication 1, 2 ou 3, caractérisé en ce que la quantité de dépôt est comprise entre 0,70 et 0,80 g par kilogramme du fil.

# FIG.1

# F I G. 2